Europäisches Patentamt

European Patent Office

Office européen des brevets

(11) Publication number: 0 404 486
A2

## EUROPEAN PATENT APPLICATION

(21) Application number: 90306627.2

(51) Int. Cl.5: H04N 5/33

(22) Date of filing: 18.06.90

(30) Priority: 21.06.89 GB 8914226

(43) Date of publication of application:
27.12.90 Bulletin 90/52

(84) Designated Contracting States:
DE FR IT NL

(71) Applicant: GEC-MARCONI LIMITED
The Grove Warren Lane
Stanmore Middlesex HA7 4LY(GB)

(72) Inventor: Matthews, John Hawkins
25 Fenwick Way
Canvey Island, Essex(GB)

(74) Representative: Loven, Keith James et al
GEC plc Patent Dept.(Chelmsford Office)
GEC-Marconi Research Centre West
Hanningfield Road
Great Baddow Essex CM2 8HN(GB)

(54) Thermal imaging system.

(57) In a thermal imaging system, in which an analogue video signal of which each frame consists of a plurality of interlaced fields is converted to a digital signal and the resulting digital signal is stored in a storage device, the or each field after the first field of each frame is sampled out of phase with the preceding field during conversion to a digital signal, thereby permitting an increase in perceived resolution, for example when displayed on a monitor.

Fig.1.

EP 0 404 486 A2

## THERMAL IMAGING SYSTEM

This invention relates to a thermal imaging system.

The resolution of video image frame stores and time base converters used in thermal imaging sensor applications is limited by the number of pixels which can be stored in one line period. The present invention provides a system which achieves an apparent increase in resolution without the need to increase either the sampling frequency or the number of storage locations per video line.

Accordingly, the invention provides a thermal imaging system, comprising an infra-red sensor providing a video signal output to a video display device displaying images corresponding to said signal, and a video signal processing device connected to the sensor and to the video display device for receiving and processing said video signal output and passing the processed signal to the video display device, characterised in that the processing device comprises an analogue-to-digital converter and a storage means for storing in digital form at least one frame of the video signal input to the converter, said frame consisting of a plurality of interlaced fields, the converter being arranged to sample each field after the first field in any given frame out of phase with the preceding field in said frame, whereby the resolution of the displayed images is enhanced.

Preferably, the converter samples the video signal at a sampling rate such that the samples are spaced one from another by a time interval $t = \frac{1}{xn}$ where 1 = time taken for one line scan,

x = number of samples per line,

n = number of fields per frame,

the or each field after the first field of each frame being sampled with a delay of t relative to the sampling of the preceding field.

Preferably each frame of the video signal consists of two interlaced fields and the second field of each frame is sampled 180° out of phase with the first. When the digital signal is read out of the storage device and re-converted to an analogue signal, an appropriate delay is preferably introduced into the or each field after the first in each frame to ensure spatial alignment of the fields constituting the frame. The delay may be introduced when data representing the or each field after the first field in a frame is read out of the storage device. Alternatively, the delay may be introduced after the digital data read out from the storage device is re-converted to an analogue signal. In the case of a two field frame, half of each pixel in each field of the reconverted analogue signal is preferably blanked so as to increase perceived resolution in the picture when displayed on a monitor.

The invention provides a low cost enhancement for any thermal imaging system whose detector is producing usable video information at frequencies higher than the video sampling rate (which is related to store size) can reconstitute.

Reference is made to the drawings, in which:

Figure 1 illustrates diagrammatically an analogue-to-digital converter forming part of a thermal imaging system according to the invention;

Figure 2 illustrates diagrammatically a read out stage of a system according to one embodiment of the invention;

Figure 3 illustrates diagrammatically an alternative embodiment of the read out stage of the system;

Figure 4 shows diagrammatically the arrangement of interlaced lines and pixels within a line of an image generated according to the invention; and

Figure 5 illustrates the blanking out of alternate halves of pixels to increase perceived resolution in the displayed picture.

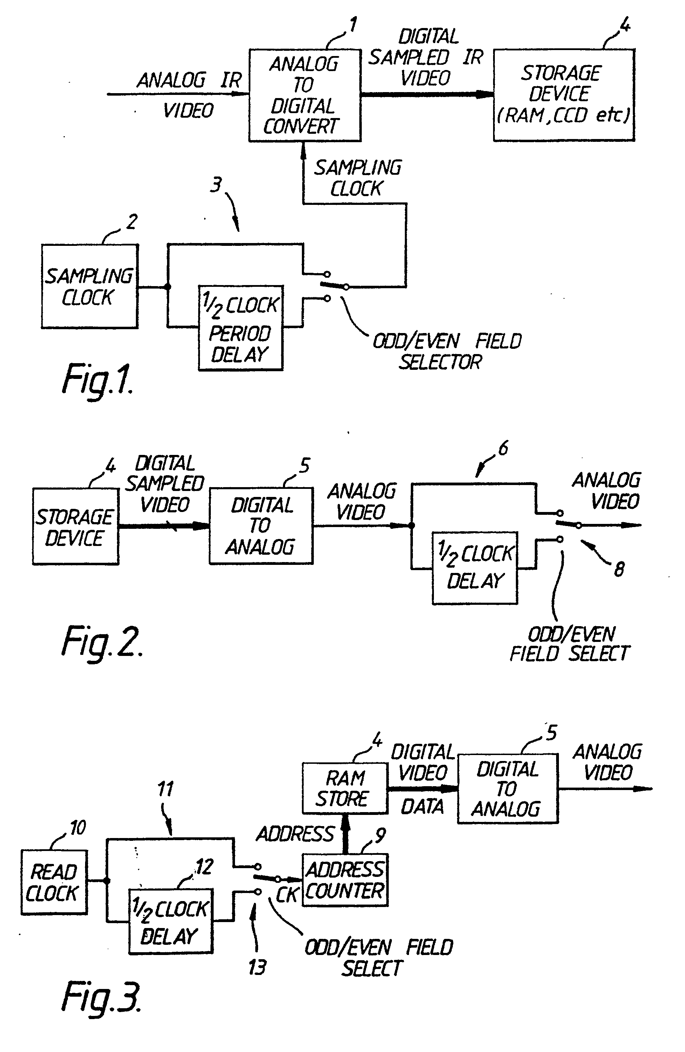

Referring first to Figure 1, an analogue video signal is fed to an analogue-to-digital converter controlled by a sampling clock 2 via a switching circuit 3 comprising two branches, in one of which a delay equal to half the clock period is arranged. A selector switching between the branches is controlled by the field synchronisation pulse element of the video signal so as to switch from one branch to the other according to whether it is in an odd or an even field of the frame. The digital sampled video signal is sent to a storage device 4 which may be a RAM or CCD, for example. For a two field interlaced frame system, sampling of alternate fields is 180° out of phase.

Figures 2 and 3 show alternative embodiments of the read out stages of the device. In Figure 2, the digital sampled video signal is read out of the storage device 4 and is passed to a digital-to-analogue converter 5, in which the signal is reconverted to analogue video. This signal then passes through a selective delay stage 6 comprising two branches, one of which contains a delay equivalent to the half clock period of the original sampling clock. A selector 8 switches between the two branches according to the field synchronisation pulse. Thus, a delay is introduced so that the pixels in the two frames of the resulting video frame are spatially aligned. In the version shown in Figure 3, an address counter 9 controls output from the storage device 4, which is a RAM. The address counter is controlled by a read clock 10 via a selective delay arrangement comprising two branches in one of which is a half clock period delay 12. A selector 13 selects between the two branches according the field to be selected. The digital data output from the RAM 4 is converted in a digital-to-analogue converter 5 and output as analogue video.

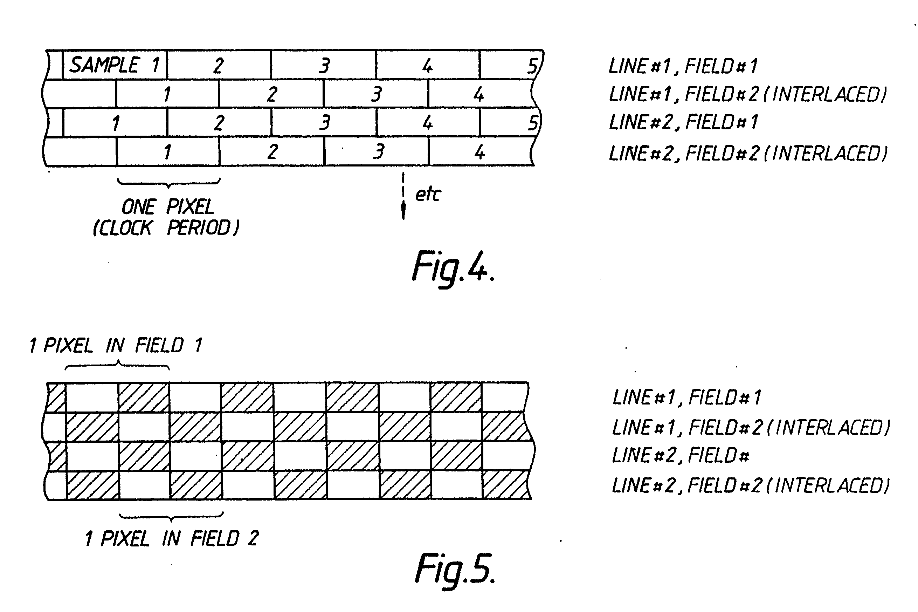

Figure 4 illustrates the pixel distribution which would be generated by such a device on a standard monitor. In order to gain the additional resolution achievable by the invention, it is necessary to blank half of each pixel. If this is not done, the human eye/monitor combination cannot perceive the additional resolution. However, if the video information was being processed by another machine, then this step would not be required. The result of this blanking is illustrated in Figure 5.

In relation to thermal imaging, the method of the invention has two advantages. Firstly the horizontal spatial resolution is increased, as the nyquist frequency has effectively been doubled. The second advantage is a reduction in aliasing. Previously, video information at frequencies higher than half sampling rate would be aliased back into the pass band as an additional noise component of the sampled signal. With the higher effective sampling rates afforded by the method of the invention, the effect of aliasing will be considerably reduced.

## Claims

1. A thermal imaging system, comprising an infra-red sensor providing a video signal output to a video display device displaying images corresponding to said signal, and a video signal processing device connected to the sensor and to the video display device for receiving and processing said video signal output and passing the processed signal to the video display device, characterised in that the processing device comprises an analogue-to-digital converter and a storage means for storing in digital form at least one frame of the video signal input to the converter, said frame consisting of a plurality of interlaced fields, the converter being arranged to sample each field after the first field in any given frame out of phase with the preceding field in said frame, whereby the resolution of the displayed images is enhanced.

2. A system according to claim 1, wherein the analogue-to-digital converter is arranged to sample the second of two interlaced fields constituting a frame with a phase delay of 180° relative to the first field.

3. A system according to claim 1 or 2, comprising a digital-to-analogue converter for reconverting the data read out from the storage device to an analogue signal, and means for introducing a delay into the or each field after the first in any one frame such that the fields constituting the frame are spatially aligned when displayed by the display device.

4. A system according to claim 3, comprising a selectable delay in the output of a clock controlling read out of data from the storage device.

5. A system according to claim 3, comprising a selectable delay in the output line from the digital-to-analogue converter.

6. A system according to any preceding claim, comprising means for causing a half of each pixel in each field of a two-field frame of the reconverted analogue signal to be blanked.

ANALOG IR VIDEO → **ANALOG TO DIGITAL CONVERT** (1) → DIGITAL SAMPLED IR VIDEO → **STORAGE DEVICE (RAM, CCD etc)** (4)

SAMPLING CLOCK

**SAMPLING CLOCK** (2) → (3) → **½ CLOCK PERIOD DELAY** → ODD/EVEN FIELD SELECTOR

*Fig.1.*

**STORAGE DEVICE** (4) → DIGITAL SAMPLED VIDEO → **DIGITAL TO ANALOG** (5) → ANALOG VIDEO → (6) **½ CLOCK DELAY** → ANALOG VIDEO → (8) ODD/EVEN FIELD SELECT

*Fig.2.*

**RAM STORE** (4) → DIGITAL VIDEO DATA → **DIGITAL TO ANALOG** (5) → ANALOG VIDEO

ADDRESS

**READ CLOCK** (10) → (11) **½ CLOCK DELAY** (12) → CK **ADDRESS COUNTER** (9)

(13) ODD/EVEN FIELD SELECT

*Fig.3.*

| SAMPLE 1 | 2 | 3 | 4 | 5 | LINE #1, FIELD #1 |
| 1 | 2 | 3 | 4 | | LINE #1, FIELD #2 (INTERLACED) |
| 1 | 2 | 3 | 4 | 5 | LINE #2, FIELD #1 |
| 1 | 2 | 3 | 4 | | LINE #2, FIELD #2 (INTERLACED) |

ONE PIXEL
(CLOCK PERIOD)

etc

*Fig.4.*

1 PIXEL IN FIELD 1

LINE #1, FIELD #1
LINE #1, FIELD #2 (INTERLACED)
LINE #2, FIELD #
LINE #2, FIELD #2 (INTERLACED)

1 PIXEL IN FIELD 2

*Fig.5.*

EP 0 404 486 A2